## Europäisches Patentamt

## European Patent Office

## Office européen des brevets

(11) Publication number: **0 151 969**
**B1**

(12)

# EUROPEAN PATENT SPECIFICATION

(45) Date of publication of patent specification: **28.06.89**

(51) Int. Cl.⁴: **G 21 C 3/32**

(21) Application number: **85100607.2**

(22) Date of filing: **22.01.85**

(54) Fuel-bearing plugging device.

(30) Priority: **14.02.84 US 580037**

(43) Date of publication of application:
**21.08.85 Bulletin 85/34**

(45) Publication of the grant of the patent:
**28.06.89 Bulletin 89/26**

(84) Designated Contracting States:
**BE CH DE FR GB IT LI SE**

(56) References cited:
**DE-A-1 921 528**
**FR-A-1 506 946**
**FR-A-2 493 024**
**FR-A-2 519 178**
**US-A-4 282 064**

(73) Proprietor: **WESTINGHOUSE ELECTRIC CORPORATION**
**Westinghouse Building Gateway Center**
**Pittsburgh Pennsylvania 15222 (US)**

(72) Inventor: **Field, David Hampton**
**430 Lockshire Circle**
**Columbia South Carolina, 29210 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

# Description

The present invention relates generally to nuclear reactor fuel assemblies and, more particularly, to improved thimble-tube plugging means therefor.

As well known in the art, the nuclear reactor core of a typical nuclear power plant may comprise a hundred or more fuel assemblies, and each fuel assembly may comprise several hundred fuel rods, such as, for example, a total of 289 arrayed in 17 rows of 17 fuel rods per row. A typical fuel assembly includes also guide tubes, or thimbles, for receiving control rods to be used in controlling the reactivity of the reactor, as well known in the art. Usually, provision is made, during the assemblage of fuel assemblies, for all of the fuel assemblies of a given size to have the same number of control-rod guide thimbles, such as 24 in an assembly using a $17 \times 17$ array of fuel rods. When in use, however, not all of the fuel assemblies of a reactor core usually require the same number of control rods, the number of control rods actually employed in the various assemblies ordinarily varying depending upon the particular location of the respective assemblies within the core. In order to prevent any substantial amounts of debris possibly present in the closed-loop coolant system from collecting in any of the unused guide thimbles and, moreover, to appropriately control the volume flow rate of reactor coolant through the thimbles, thimble plugging devices have been conventionally employed in connection with those thimbles which do not have control rods and/or burnable poison rods operatively associated therewith. Conventional thimble tube plugging devices comprise cylindrical solid rods supported from a holddown-assembly base plate so as to extend downward into those thimble tubes in which no control rods and/or burnable poison rods are employed and which therefore need to be plugged.

Leakage of neutrons out of the reactor core is a factor to be considered in the operation of a reactor facility since leakage of active neutrons from the core effectively lowers the reactivity of the core in a similar manner as does the excessive absorption of active neutrons by poisons. Thus, in order to compensate for the loss of free neutrons due to leakage, additional amounts of soluble boron poisons usually are removed from the core coolant to maintain the reactor critical. Such practices are economically wasteful, however, in that neutrons are effectively lost or consumed without yielding an economically useful product, such as, for example, additional plutonium fuel, or, in other words, in that the uranium fuel is depleted inefficiently, with the consequence of higher fuel costs and a shorter fuel cycle.

It has been observed that one general area of a reactor core where substantially neutron leakage occurs is the axial path defined by a unused thimble tube having a conventional plug disposed therein, such thimbles with the solid plugs virtually defining axial corridors through which free neutrons may escape from the core.

It is the principal object of the invention to provide an improved manner of plugging thimble tubes.

Accordingly, the invention resides in a nuclear-reactor fuel assembly comprising a plurality of fuel rods and a predetermined array of guide-thimble tubes each adapted to receive a control rod, said fuel assembly being intended for use in a nuclear-core location providing for at least one of the guide-thimble tubes to remain devoid of a control rod, and said at least one guide-thimble tube having removably inserted therein an elongated thimble plug occupying the upper end portion of the thimble tube for minimizing the flow of reactor coolant therethrough, which is characterized in that said elongate thimble plug comprises a cladding tube containing fissile nuclear fuel.

Unlike the solid plugs heretofore employed for plugging unused thimble tubes, the thimble plugs embodying the invention enable free neutrons which otherwise would tend to leak from the reactor core to react with the nuclear fuel within the plugs and thus to be economically utilized for fissioning.

An additional benefit is derived therefrom and worth noting. In order that thimble plugs can be removed in the event the particular fuel assembly in which they are used is subsequently to be employed in a controlled core location again, they are customarily designed not to form a perfect fit with the associated guide thimbles but instead to leave enough clearance for easy insertion and removal. Due to this clearance, some of the reactor coolant can still pass through the plugged guide thimble but a fuel-containing plug embodying the invention generates heat which is absorbed by the coolant passing through the plugged guide thimbles so that this coolant, when re-mingling with the main stream, will be at substantially the same temperature as the latter and will not cause any drop in the overall coolant exit temperature and, hence, in the operating efficiency of the reactor.

A preferred embodiment of the invention will now be described, by way of example only, with reference to the accompanying drawings, in which:

Figure 1 is a vertical elevational view, partly in section, of a guide-thimble plug assembly embodying the invention; and

Figure 2 is an enlarged, detailed view of one of the thimble plugs of the assembly shown in Figure 1.

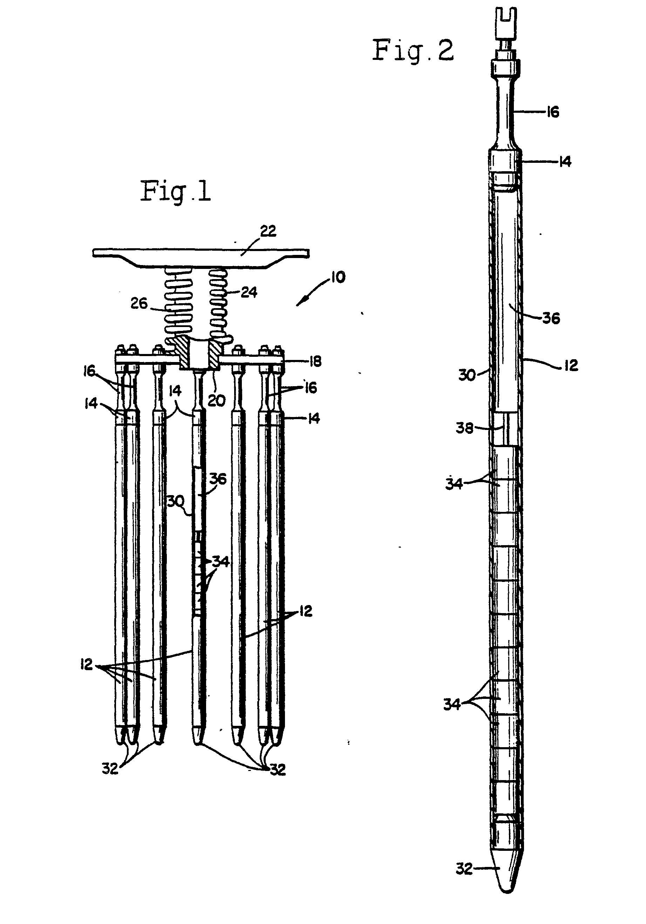

Referring now to Figure 1 in particular, the guide-thimble plug assembly shown therein and generally designated with reference numeral 10 comprises a plurality of thimble tube plugs 12. Each thimble tube plug 12 includes an upper end plug 14 with a suspension fitting 16 for supporting the thimble tube plug 12 from a base plate 18 associated with a conventional holddown assembly including a holddown bar structure 22, a tubular spring guide 20 extending between the plate 18 and the structure 22, and a pair of concentrical holddown springs 24 and 26 coaxially disposed upon the spring guide 20 between the plate 18 and the structure 22.

Referring now to Figure 2, it shows in detail one of the thimble tube plugs 12 of the plug assembly 10 illustrated in Figure 1. The plug 12 is similar to a fuel rod in that it comprises a cladding tube 30, the upper end of which is sealed by means of the end plug 14, and the lower end of which is sealed by means of an end plug 32. The cladding tube 30 may be fabricated either from a suitable zirconium based alloy, such as, for example, zircaloy-2 or zircaloy-4, or from stainless steel; the zirconium based alloys are preferred to stainless steel since they exhibit relatively low capture cross-sections with respect to thermal neutrons. A stack of cylindrical nuclear fuel pellets 34, preferably of enriched uraniium fuel, is disposed within the cladding tube 30 in the lower region thereof and supported upon the lower end-plug 32. The axial extent, or height, of the stack of fuel pellets 34 may be, for example, approximately 15.25 cm. Above the stack of pellets 34 there is a plenum chamber 36 which accommodates any gaseous emissions produced during the fission process. A holddown spring clip 38 is provided in the lower region of the plenum chamber 36 to hold the fuel pellets 34 firmly in their stacked position; it will be appreciated that a coil spring (not shown) disposed between the stack of fuel pellets 34 and the upper end-plug 14 could be used instead of the spring clip 38.

It should be noted that each of the particular fuel-bearing thimble tube plugs 12 disposed herein has an overall axial length comparable to that of a conventional thimble tube plug. Thus, when the thimble tube plug assembly 10 is in its proper position on the fuel assembly associated therewith, the thimble tube plugs 12 depending from the base plate 18 and inserted into the respective thimbles (not shown) to be plugged will occupy upper end portions of the thimble tubes.

The thimble plugs according to the invention will provide an axial fuel zone or blanket effectively preventing the escape, hence waste, of active, free or excess neutrons through thimble tube plug corridors, such as could result from the use of conventional thimble plugs, as previously explained herein. In the thimble plugs embodying the invention, the free neutrons prevented from escaping are utilized for fissioning U—235 atoms.

## Claims

1. A nuclear-reactor fuel assembly comprising a plurality of fuel rods and a predetermined array of guide-thimble tubes each guide thimble tube being adapted to receive a control rod, said fuel assembly being intended for use in a nuclear-core location providing for at least one of the guide-thimble tubes to remain devoid of a control rod, and said at least one guide-thimble tube having removably inserted therein an elongated thimble plug for minimizing the flow of reactor coolant therethrough, characterized in that said elongate thimble plug (12) which is occupying the upper end portion of the thimble tube comprises a cladding tube (30) containing fissile nuclear fuel (34).

2. A nuclear-reactor fuel assembly according to claim 1, 2 or 3, characterized in that said nuclear fuel (34) comrpises enriched uranium.

3. A nuclear-reactor fuel assembly according to claim 1 or 2, characterized in that said or each thimble plug (12) is supported from a base plate (18) of a holddown assembly.

## Patentansprüche

1. Kernreaktort-Brennelement mit einer Vielzahl von Brennstäben und einer vorgegebenen Anordnung von Führungsrohren, die jeweils zur Aufnahme eines Steuerstabs ausgebildet sind, wobei das Brennelement zum Einsatz an einer Reaktor kernposition vorgesehen ist, an welcher mindestens eines der Führungsrohre ohne Steuerstab bleibt und dieses mindestens eine Führungsrohr einen Länglichen, herausnehmbaren Füllstopfen zur Minimalhaltung der Reaktorkühlmitteldurchströmung aufnimmt, dadurch gekennzeichnet, daß der langgestreckte Füllstopfen (12), der den oberen Endabschnitt des Führungsrohrs einnimmt, ein spaltbaren Kernbrennstoff (34) enthaltendes Hüllrohr (30) aufweist.

2. Kernreaktor-Brennelement nach Anspruch 1, dadurch gekennzeichnet, daß der Kernbrennstoff (34) angereichertes Uran enthält.

3. Kernreaktor-Brennelement nach Anspruch 1 oder 2, dadurch gekennzeichnet, daß der bzw. jeder Füllstopfen (12) an einer Stützplatte (18) einer Niederhaltevorrichtung abgestützt ist.

## Revendications

1. Assemblage combustible pour réacteur nucléaire comprenant une pluralité de barres de combustible et un arrangement prédéterminé de tubes de chaussettes, chaque tube de chaussette étant adapté pour recevoir une barre de commande, ledti assemblage combustible étant destiné à être utilisé dans un emplacement du coeur nucléaire prévu pour qu'au mons un des tubes de chaussettes reste sans barre de commande, et sand ce tube de chaussette est inséré de façon amovible un obturateur allongé de chaussette pour réduire à un minimum l'écoulement traversant du réfrigérant de réacteur, caractérisé en ce que ledit obturateur allongé (12) de chaussette, qui occupe la partie d'extrémité supérieur du tube de chaussette, comprend un tube de gaînage (30) contenant du combustible nucléaire fissible (34).

2. Assemblage combustible pour réacteur nucléaire selon la revendication 1, caractérisé en ce que ledit combustible nucléaire (34) comprend de l'uranium enrichi.

3. Assemblage combustible pour réacteur nucléaire selon la revendication 1 ou 2, caractérisé en ce que chaque obturateur (12) de chaussette est supporté par une plaque de base (18) d'un ensemble de support.

EP 0 151 969 B1

Fig.1

Fig.2